# EUROPEAN PATENT SPECIFICATION

(11) **EP 2 210 497 B1**
(45) Date of publication and mention of the grant of the patent: **22.05.2013**
(21) Application number: 09180761.0
(22) Date of filing: 24.12.2009
(51) Int. Cl.: A23B 4/08, A23B 4/09, A23L 3/37, A23L 3/375, B65D 81/34, A23L 1/00, A23L 1/325, A23L 1/315, A23L 1/31

(54) **A frozen food product and method of preparing a frozen food product**
Tiefgekühltes Lebensmittelprodukt und Verfahren zur Herstellung eines tiefgekühlten Lebensmittelprodukts
Produit alimentaire surgelé et son procédé de préparation

(30) Priority: 16.01.2009 GB 0900742; 11.12.2009 EP 09178840
(43) Date of publication of application: 28.07.2010
(73) Proprietor: Birds Eye IPCO Limited, Feltham, Middlesex TW14 8HA (GB)
(72) Inventor: Nicholls, Richard, Feltham, Middlesex TW14 8HA (GB)
(74) Representative: Murphy, Colm Damien

(56) References cited:
- WO-A1-96/37111
- WO-A1-03/063597
- DE-A1- 2 134 175
- JP-A- 61 132 170
- JP-A- 2006 044 708
- DATABASE GNPD [Online] MINTEL; October 2007 (2007-10), "Tuna Steak with Sweet Chilli Butter", XP002621860, Database accession no. 786442
- DATABASE GNPD [Online] MINTEL; June 2006 (2006-06), "Wild Alaskan salmon with Pea, watercress & Dill Butter", XP002621861, Database accession no. 548945

## Description

The present invention relates to a method for preparing a frozen food product, especially a frozen poultry or fish product, and frozen food products.

It is known to prepare for vending fish and poultry products in frozen form. Typically, such products are fast frozen and packed in plastic pouches or trays. For some products, such as fish fillets, it is known to apply an ice glaze to the fish so as to form an ice covering. This is done to reduce moisture loss from the fish during storage. DE2134175 teaches the use of an ice glaze for coating a fish product where the ice glaze contains spices.

It is also known to provide frozen fish packages with a hardened butter portion. JP61132170 describes a food package in the form of an aluminium baking container in which a hardened butter portion is placed. A fish portion is then placed loose on top of the butter portion and the package sealed and frozen. A disadvantage of this product is that the butter is located underneath the fish. As a result, during cooking most of the fish is not contacted by the butter whilst the lowermost part of the fish is always in contact with the butter. This can lead to displeasing taste characteristics in the cooked product.

According to the present invention there is provided a method of preparing a frozen food product, preferably a frozen poultry or fish product, comprising the steps of:
a) obtaining a food portion;
b) positioning a portion of an ingredient preparation solely on top of the food portion;
c) optionally freezing at least a surface of both the food portion and the portion of the ingredient preparation; and
d) applying an ice glaze to the food portion and the portion of the ingredient preparation to enhance adhesion of the portion of the ingredient preparation with the food portion.

Advantageously, applying said ice glaze helps to hold the portion of the ingredient preparation in position solely on top of the food portion.

The food portion in step a) is preferably an at least partially frozen portion or has a surface thereof which is frozen. In this embodiment step c) is optional.

The food portion may be subject to one or more processing steps prior to positioning the ingredient preparation. For example, the food portion may be subject to washing, deboning, gutting, etc.

The food portion may comprise a single piece of food, such as a poultry breast piece or a fish fillet or may comprise a plurality of pieces of food that are combined to form a single food portion in a known manner. For example, the food portion may be formed from multiple pieces of food which are reformed (with or without binding agents) in a known manner into a desired shape. Examples include minced poultry meat and cohering fish flesh prepared from fillets or minced fish flesh.

The food product may be cut or shaped into portions of uniform weight and dimensions. The food portion may be formed into a shape that resembles a natural poultry or fish product, e.g. the shape of a chicken breast or the shape of a fish fillet, or can be shaped into a more geometrically regular shape, e.g. a parallelepiped block. The use of uniform dimensions for each food portion manufactured can be useful for aiding application of the ingredient preparation when it is applied in a semi-automatic or automatic process, e.g. by means of a machine on a food preparation line.

When the food product of step a) is not at least partially frozen, the method step c) of at least partially freezing the food portion and the portion of the ingredient preparation is advantageous in reducing the temperature of the portion of the ingredient preparation (as well as the surface of the food portion) to below the freezing point of the water-based ice glaze to ensure good pick up and formation of the ice glaze during method step d). However, the food portion of step a) may be at least partially frozen prior to step a) or during step c) or both.

Advantageously, the application of an ice glaze to the combination of the food portion and the portion of the ingredient preparation helps to hold the portion of the ingredient preparation in position on the food product, for example during manufacture, transport and up to the point of cooking. This is particularly advantageous where the ingredient preparation, as disclosed further below, may be a fat-based ingredient preparation which would have a tendency to slip off the food portion. It is desirable to maintain the portion of the ingredient preparation on top of the food portion for two reasons. Firstly, the ingredient preparation can therefore be easily visible to a consumer at the time of purchasing the product or at the time of cooking the product (in particular where the packaging is partly or wholly transparent). Secondly, during cooking the ingredient preparation will melt and be uniformly distributed across the top surface of the food product before being enabled to soak downwardly through the food product. This is in marked contrast to prior art suggestions of placing a fat-based preparation in the base of a food portion container. By use of the ice glaze it has been enabled to vend a frozen food product with a portion of an ingredient located on top which will remain in position until the product is cooked.

The ice glaze may be formed from water or be water-based or other aqueous-based liquid, such as stock. Additives such as flavourings, preservative or colourings may optionally be added to the glaze liquid. The glaze may be applied by any suitable manner as known in the art such as spraying or dipping.

As aforementioned, the food portion of step a) may be an at least partially frozen food portion. For example, the food product may be completely frozen or surface frozen prior to step b). This may typically be the case where the food portion has been subject to a prior freezing process in order to maintain freshness of the food portion during transport of storage.

In one embodiment the method comprises the additional step of:
e) freezing the food portion, the portion of the ingredient preparation and the ice glaze;

This additional step is generally advantageous in ensuring that the entire food product is sufficiently well frozen prior to subsequent packing and frozen storage. In addition, the additional freezing step helps to thicken and enhance the ice glaze of the product. This additional freezing step is particularly advantageous where the original starting food portion is not frozen or only partially frozen before applying the ingredient preparation.

Preferably the method further comprises the additional step of:
f) packaging the frozen food product in a cook-in-bag package.

Packaging the frozen food product allows for easier handling, transport and vending of the product.

Advantageously, a cook-in-bag package is used which allows the food product to be cooked without first having to remove the frozen food product from the package.

Preferably the portion of the ingredient preparation is positioned solely on top of the food portion by piping a quantity of an ingredient preparation onto the food portion.

Piping the ingredient preparation onto the food portion has a number of advantages. The quantity of preparation applied can be carefully controlled. Further, the location and shape of the applied preparation can be controlled. For example, the preparation can be piped in a decorative shape. Piping can be performed manually using a piping bag. However, preferably the piping is carried out by machine using a pump and a reciprocating nozzle.

Preferably the ingredient preparation is piped onto the food portion from a nozzle that is moved relative to the food portion during piping and wherein a spacing between the food portion and the nozzle is kept substantially constant during piping.

It has been found that maintaining a substantially constant spacing between the nozzle and the food portion during piping improves the adhesion of the ingredient preparation with the food portion. Preferably, the spacing between the nozzle and the food portion is maintained at less than 10mm and more preferably at less than 5mm.

Preferably, the portion of the ingredient preparation is positioned on the food portion such that it solidifies on contact with the frozen surface. For example the ingredient preparation is formed into a viscous or semi-solid state at a temperature of less than 20 degrees Celsius. This enables easy dispensing of the ingredient preparation but allows for quick solidification of the ingredient preparation on contact with a frozen surface. For a butter-based ingredient preparation it has been found that a temperature of between 15 and 20 degrees Celsius improves adhesion of the preparation of the food portion. Adhesion can be further improved by ensuring that the surface of the food portion is not slippery.

The ingredient preparation may comprise a starch-based preparation such as a starch-based sauce. The ingredient preparation may comprise a fat-based ingredient preparation. The ingredient preparation may preferably contain both fat-based and starch-based components.

Preferably the fat-based ingredient preparation comprises a butter-based preparation.

Preferably the preparation is formulated to be of a pumpable consistency to allow for machine piping of the preparation onto the food portion.

The fat-based ingredient preparation may comprise a blend of butter, oil, starch, emulsifiers and optionally herbs and/or seasoning. When the frozen food product is cooked the ingredients combine with the ice glaze to form a sauce.

In one embodiment the freezing of the food portion and portion of fat-based ingredient preparation in step c) is a surface freezing only.

The food portion may be poultry or fish portion. Examples include portions of chicken meat, in particular whole or reformed chicken breast, and fish including for example cod, haddock, plaice, sole, coley, monkfish, salmon, Alaska Pollock and pangasius.

The present invention also provides a frozen food product, preferably a frozen poultry or fish product, comprising:
a food portion;
a portion of an ingredient preparation solely on top of the food portion and;
an ice glaze;
wherein the portion of the ingredient preparation is retained in position on the food portion at least in part by the ice glaze covering the food portion and the portion of the ingredient preparation.

Preferably, the frozen food product further comprises a cook-in-bag package which encapsulates the food portion, the portion of the ingredient preparation and the ice glaze.

The cook-in-bag package may comprise a plurality of perforations to allow steam to escape the package during cooking. Preferably the size and number of the perforations results in the bag inflating during cooking due to the production of steam which holds the bag material out of contact with the top surface of the food product during cooking which allows better melting and distribution of the ingredient preparation.

Preferably, the cook-in-bag is at least partially transparent to allow a consumer to see the frozen food product with the ingredient preparation in place prior to cooking.

The food portion may be a poultry or fish portion.

The ingredient preparation may comprise a starch-based preparation. The ingredient preparation may comprise a fat-based preparation.

Preferably the fat-based ingredient preparation comprises a butter-based preparation.

WO03/063597 discloses methods and devices for the continuous, in-line marinating, flavouring, and freeze-processing meat. The methods involve injecting meat with a first set of ingredients, coating the meat with a second set of ingredients, spraying meat with a third set of ingredients, freezing the surface of the meat, freezing the meat throughout, and submerging the meat in a fourth set of ingredients.

WO96/37111 discloses a procedure for preparing a ready-made food portion, a portion piece being frozen to a temperature at least -15°C, and the gravy being frozen onto the surface of the portion piece. The gravy is frozen in at least two different layers on the portion piece so that a fat-free liquid layer counteracting oxidation comes to constitute the outermost layer.

DE2134175 discloses a method of coating a fish, after initial deep freezing with >=1 layer of ice glaze by immersion in spiced liquor before packing into the bag which is either fully waterproof and hermetically sealed or is progressively water permeable from the outside in at cooking temp.

JP2006044708 discloses a cooking bag made of a film body of laminated polyolefin resin films, and is provided with an opening which is adapted to open the cooking bag and close it hermetically in cooking. The film body consists of an inner film layer made of a polyolefin resin film having micropores allowing steam to pass therethrough, and an outer film layer which is at least fixed to one surface of the inner film and has micropores allowing steam to pass therethrough.

An embodiment of the present invention will now be described, by way of example only, with reference to the accompanying drawings, in which:
Figure 1 is a flow chart of a method of preparing a frozen food product according to the present invention;
Figure 2 is a schematic view of a food portion;
Figure 3 is a schematic view of the food portion of Figure 2 with a portion of fat-based ingredient preparation positioned on top;
Figure 4 is a schematic view of a frozen food product according to the present invention; and
Figure 5 is a schematic view of the frozen food product of Figure 4 together with a package.

In the following, the invention will be described, by way of example only, as used for the preparation of a frozen fish product formed from a fish fillet. However, as noted above, the invention finds application with other food products.

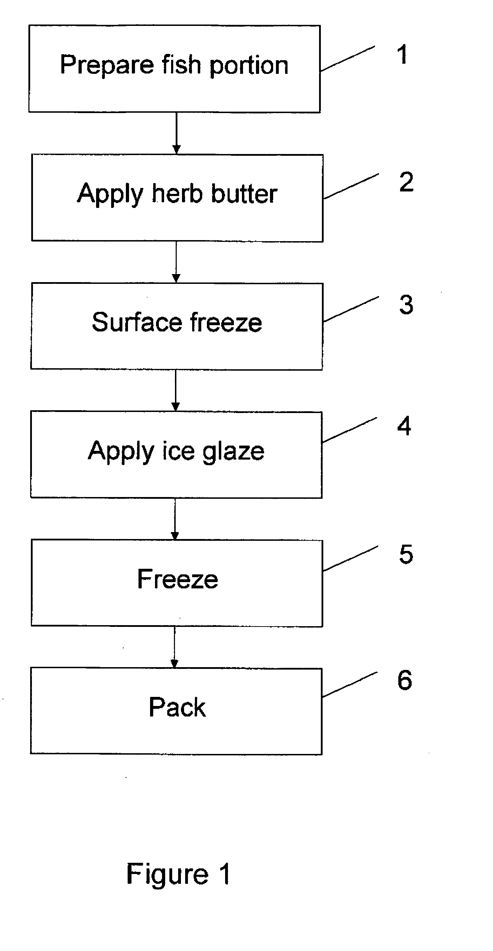

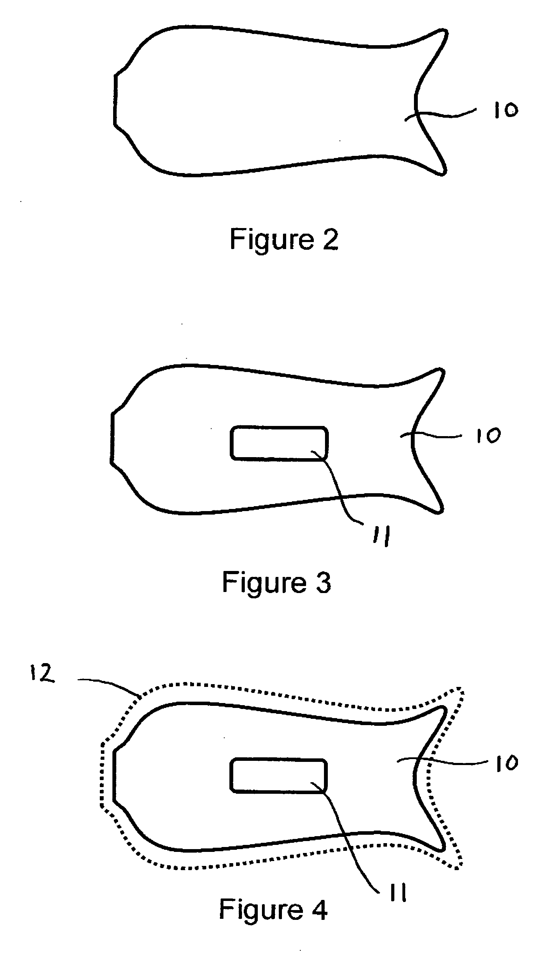

Figure 1 is a flow chart describing one example of the inventive method. Step 1 involves preparing a fish portion. As shown in Figure 2, a fish fillet 10 forms the fish portion to which the method of preparation of the present example is applied. The fish fillet 10 is washed and gutted and trimmed if necessary to obtain a desired shape, size and weight. The fish fillet 10 is frozen prior to the start of the method shown in flow chart form in Figure 1. Typically, the fish fillet 10 is frozen soon after capture of the originating fish and transported to a food preparation facility in the frozen form in order to maintain freshness. For the present method the fish fillet 10 should not have an ice glaze present before application of the fat-based ingredient preparation in Step 2. If the fish fillet 10 is transported to the preparation facility with an ice glaze this should be removed before proceeding with Step 2.

Step 2 as shown in Figure 1 involves applying a fat-based ingredient preparation to the fish fillet 10. An example of a suitable fat-based ingredient preparation is a herb butter formed from a blend of butter, oil, herbs, seasonings, starch and emulsifiers. Preferably the starch should be hot swelling such that during cooking when the herb butter is heated the starch is evenly distributed throughout before gelatinising.

The fat-based ingredient preparation preferably comprises the following components at the stated weight percentage:

| | Amount (Weight %) |
|---|---|
| Butter | 60 - 80% |
| Vegetable Oil | 0 - 5% |
| Salt | 0 - 5% |
| Emulsifier (Lecithin) | 0 - 3% |
| Starch (waxy rice, hot swelling) | 2 - 10% |
| Mixed herbs (IQF) | 5 - 20% |
| Garlic Puree | 1 - 3% |
| Gelatine | 0 - 3% |

In a first example the ingredient preparation comprises:

| | Amount (Weight %) |
|---|---|
| Butter | 60% |
| Vegetable Oil | 5% |
| Salt | 5% |
| Emulsifier | 3% |
| Starch (waxy rice, hot swelling) | 10% |
| Mixed herbs (IQF) | 11% |
| Garlic Puree | 3% |
| Gelatine | 3% |

In a second example the ingredient preparation comprises:

| | Amount (Weight %) |
|---|---|
| Butter | 80% |
| Vegetable Oil | 0% |
| Salt | 0% |
| Emulsifier (Lecithin) | 3% |
| Starch (waxy rice, hot swelling) | 10% |
| Mixed herbs (IQF) | 5% |
| Garlic Puree | 0% |
| Gelatine | 2% |

The herb butter formulation and mixing process delivers a herb butter with a pumpable consistency when at a temperature of between about 15 and 20 degrees Celsius.

The butter preparation is mixed in a suitable mixer or bowl chopper. The butter, vegetable oil and emulsifier are added first and mixed (high speed) until the mixture forms a uniform soft, creamy consistency. (Depending on the capability of the mixer, the butter may be added at any temperature up to approximately 20 degrees Celsius). The other dry ingredients are then added gradually until evenly distributed throughout the mix and the mix is of the required temperature and viscosity (see below).

Finally, the speed of the mixer is reduced and the frozen herbs are added. Once the herbs are added, mixing should be just sufficient to ensure that the particles of herb are evenly distributed throughout the mix. (Further mixing may result in particle breakdown &/or leaching of colour).

Addition of the frozen herbs results in a rapid temperature drop and velocity increase. Therefore, the amount of mixing prior to addition of the herb should be adjusted such that after the herb is added and blended, the final mix is of the required temperature and consistency, i.e. preferably 15 to 20 degrees Celsius and pumpable.

A maximum handling temperature of 20 degrees Celsius for the herb butter is preferred to substantially prevent microbial growth.

As shown in Figure 3, a portion 11 of the herb butter preparation is applied to the top or uppermost surface of the fish fillet 10. The portion 11 is preferably applied in a decorative pattern such as in wavy lines, curves or a spiral pattern. The herb butter 11 is pumped by machine out of a reciprocating nozzle. In order to promote good adhesion between the herb butter 11 and the fish surface it has been found beneficial to maintain a constant spacing between the outlet of the nozzle and the fish surface of less than 10mm, preferably 1 to 5mm.

Step 3 as shown in Figure 1 is an optional step and involves surface freezing the combination of the fish fillet 10 and the herb butter 11. When the fish fillet 10 is already frozen or its surface is frozen, step 3 is not necessary, although it may still be carried out. Step 3 is, however, preferable when the fish fillet 10 is not already at least partially frozen. The surface freezing may be carried out by known methods such as blast freezing, dipping in liquid nitrogen or spraying with CO₂. Importantly, both the surface of the fish fillet 10 and the surface of the herb butter 11 are frozen. It should be noted that where the fish fillet 10 is already frozen at the start of the method of preparation, the surface freezing of the combination of the fish fillet 10 and the herb butter 11 may not change significantly the temperature or state of the fish fillet 10. Of course, the herb butter 11 temperature will be reduced to below freezing point by this process step but the fish fillet 10 may at this time already be at below freezing point.

Step 4 as shown in Figure 1 involves applying an ice glaze to form the frozen food product of the present invention. The glazing solution may be any potable water-based liquid such as water or stock. The combination of the fish fillet 10 and the herb butter 11 is sprayed with or dipped in the glazing liquid. Due to the sub-zero temperature of the surface of the fish and the herb butter the ice glaze provides an outer ice coating 12 to both the fish fillet 10 and the herb butter 11 as shown in Figure 4. Importantly, the ice glaze 12 provides an enhanced mechanical bond between the herb butter 11 and the fish fillet 10.

Step 5 as shown in figure 1 is to carry out a freezing step on the combination of the fish fillet 10, the herb butter 11 and the ice glaze 12. This step may be considered optional where the fish fillet 10 is already fully frozen and cold enough. However, typically this additional step is advantageous as it not only completes freezing of the herb butter 11 and fish fillet 10 (where previously only surface frozen) but also it increases the thickness of the ice glaze 12 by ensuring that more of the glazing liquid applied during the glazing step is frozen onto the food product rather than dripping off. The second freezing step may be carried out, for example, by using a spiral freezer or nitrogen tunnel.

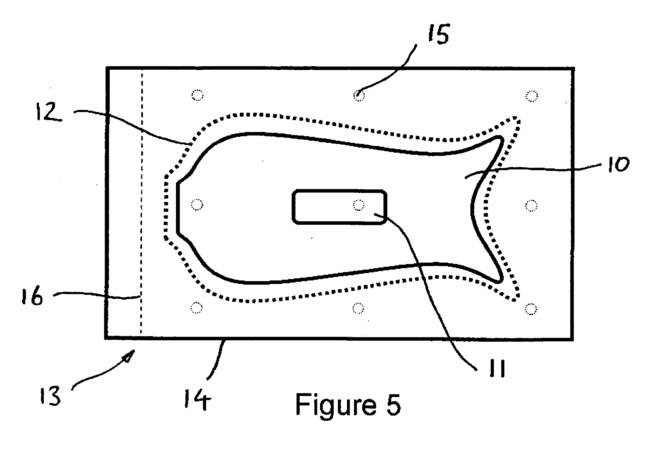

Step 6 as shown in Figure 1 is to pack the frozen food product. Typically, this step is desirable to provide additional protection to the frozen food product and provide a convenient means for cooking the product. According to a preferred aspect of the present invention as shown in Figure 5, the pack 13 comprises upper and lower sheets of a laminate that is heat resistant up to 200 degrees Celsius and preferably at least 240 degrees Celsius. A suitable example is a polyester laminate. The frozen food product is encapsulated in the pack 13 which is sealed in a known manner, for example heat sealed around its periphery.

Either part or the whole of the upper sheet of laminate is transparent to allow a consumer to view the fish fillet 10 and herb butter 11 prior to cooking. The pack 13 is provided with a plurality of holes 15 in its upper sheet to allow steam generated during cooking to escape from the pack 13 in a controlled manner. Preferably, the number, size and distribution of the holes 15 is such that the generated steam causes the pack 13 to inflate such that the upper sheet is moved out of contact with the uppermost surface of the fish fillet 10 and the herb butter 11. This allows for better distribution of the herb butter 11 during cooking. The pack 13 may also comprise a line of weakness 16, for example a row of closely spaced perforations, which allow for easy opening of the pack 13 after cooking by tearing.

The pack 13 may be inserted into a cardboard outer package for vending as is known in the art.

In the above example, the food portion, in the form of a fish fillet 10, has been described as frozen at the start of the method of Figure 1. However, the inventive method may be applied to food portions that are raw or chilled at the start of the method.

Whilst the present invention finds particularly advantageous application with poultry and fish food products it can also be applied to other food products such as other meat products including beef, pork and lamb as will be appreciated by the person skilled in the art.

## Claims

1. A method of preparing a frozen food product, comprising the steps of:
a) obtaining a food portion;
b) positioning a portion of an ingredient preparation solely on top of the food portion;
c) applying an ice glaze to the food portion and the portion of the ingredient preparation to enhance adhesion of the portion of the ingredient preparation with the food portion.

2. The method of claim 1 wherein the food portion of step a) is an at least partially frozen food portion.

3. The method of claim 1 or claim 2 comprising the additional step of :
d) freezing the food portion, the portion of the ingredient preparation and the ice glaze.

4. The method of any preceding claim comprising the additional step of:
e) packaging the frozen food product in a cook-in-bag package.

5. The method of any preceding claim wherein the portion of the ingredient preparation is positioned on top of the food portion by piping a quantity of an ingredient preparation onto the food portion.

6. The method of claim 5 wherein the ingredient preparation is piped onto the food portion from a nozzle that is moved relative to the food portion during piping and wherein a spacing between the food portion and the nozzle is kept substantially constant during piping.

7. The method of claim 2 wherein the portion of the viscous or semi-solid ingredient preparation is positioned on the frozen surface of the at least partially frozen food portion such that it solidifies on contact with the frozen surface.

8. The method of any preceding claim wherein the ingredient preparation comprises a starch-based preparation.

9. The method of any of claims 1 to 7 wherein the ingredient preparation comprises a fat-based ingredient preparation and/or optionally
wherein the fat-based ingredient preparation comprises a butter-based preparation; and/or optionally
wherein the fat-based ingredient preparation comprises a blend of butter or vegetable fat, oil, starch, emulsifiers and optionally herbs and/or seasoning.

10. The method of any preceding claim wherein the freezing of the food portion and portion of the ingredient preparation is a surface freezing only.

11. The method of any preceding claim wherein the food portion is a poultry or fish portion and optionally a frozen poultry or fish portion.

12. A frozen food product, comprising:
a food portion;
a portion of an ingredient preparation solely on top of the food portion; and
an ice glaze;
wherein the portion of the ingredient preparation is retained in the position on the food portion at least in part by the ice glaze covering the food portion and the portion of the ingredient preparation.

13. The frozen food product of claim 12 further comprising a cook-in-bag package which encapsulates the food portion, the portion of the ingredient preparation and the ice glaze; and/or optionally
wherein the cook-in-bag package comprises a plurality of perforations to allow steam to escape the package during cooking.

14. The frozen food product of any of claims 12 or 13 wherein the food portion is a poultry or fish portion and optionally a frozen poultry or fish portion.

15. The frozen food product of any of claims 12 to 14 wherein the ingredient preparation comprises a starch-based preparation; and/or optionally
wherein the ingredient preparation comprises a fat-based ingredient preparation; and/or optionally
wherein the fat-based ingredient preparation comprises a butter-based preparation.

## Patentansprüche

1. Ein Verfahren zur Herstellung eines Tiefkühlprodukts, wobei das Verfahren aus den folgenden Schritten besteht:
a) Beschaffung einer Portion eines Lebensmittelprodukts;
b) Positionierung einer Portion Zutaten nur auf der Oberfläche der Lebensmittelportion;
c) Glasierung der Lebensmittelportion und der Zutatenportion mit einer Glasur aus Eis, um die Lebensmittelportion und die Zutatenportion aneinander zu binden.

2. Das Verfahren nach Anspruch 1, wobei die Lebensmittelportion in Schritt a) mindestens teilweise tiefgefroren ist.

3. Das Verfahren nach Anspruch 1 oder 2, wobei das Verfahren den folgenden zusätzlichen Schritt umfasst:
d) Tiefkühlung der Lebensmittelportion, der Zutatenportion und der Glasur aus Eis.

4. Das Verfahren nach einem der voranstehenden Ansprüche, wobei das Verfahren den folgenden zusätzlichen Schritt umfasst:
e) Verpackung des Tiefkühlprodukts in einer kochfertigen Verpackung.

5. Das Verfahren nach einem der voranstehenden Ansprüche, wobei die Zutatenportion auf der Lebensmittelportion positioniert wird, indem die Zutatenportion direkt auf die Lebensmittelportion aufgetragen wird.

6. Das Verfahren nach Anspruch 5, wobei das Auftragen der Zutatenportion auf die Lebensmittelportion mittels einer Düse erfolgt, die während des Auftragens relativ zur Lebensmittelportion bewegt wird und einen im Wesentlichen konstanten Abstand zur Lebensmittelportion beibehält.

7. Das Verfahren nach Anspruch 2, wobei die zähflüssige bzw. halbfeste Zutatenportion so auf der tiefgefrorenen Oberfläche der mindestens teilweise tiefgefrorenen Lebensmittelportion positioniert wird, dass sie sich beim Kontakt mit der tiefgefrorenen Oberfläche verfestigt.

8. Das Verfahren nach einem der voranstehenden Ansprüche, wobei die Zutatenportion Stärke enthält.

9. Das Verfahren nach einem der voranstehenden Ansprüche 1 bis 7, wobei die Zutatenportion Fett enthält und wobei das Fett wahlweise Butter oder eine Mischung aus Butter oder Pflanzenöl, Öl, Stärke, Emulgatoren, Kräutern und/oder Gewürzen enthält.

10. Das Verfahren nach einem der voranstehenden Ansprüche, wobei das Tiefkühlen der Lebensmittelportion und der Zutatenportion nur die Oberfläche tiefkühlt.

11. Das Verfahren nach einem der voranstehenden Ansprüche, wobei es sich bei der Lebensmittelportion um eine Portion Geflügel oder Fisch und wahlweise um eine tiefgefrorene Portion Geflügel oder Fisch handelt.

12. Ein Tiefkühlprodukt bestehend aus:
einem Lebensmittelprodukt;
einer Portion Zutaten nur auf der Oberfläche der Lebensmittelportion; und
einer Glasur aus Eis;
wobei die Zutatenportion ihre Position oben auf der Lebensmittelportion mindestens teilweise durch die Glasur aus Eis, die die Lebensmittelportion und die Zutatenportion umgibt, beibehält.

13. Das Tiefkühlprodukt nach Anspruch 12, wobei das Tiefkühlprodukt weiter aus einer kochfertigen Verpackung besteht, die die Lebensmittelportion, die Zutatenportion und die Glasur aus Eis umgibt, und wobei die kochfertige Verpackung wahlweise eine Vielzahl von Perforationen aufweist, durch die während des Kochens Dampf entweichen kann.

14. Das Tiefkühlprodukt nach einem der voranstehenden Ansprüche 12 oder 13, wobei es sich bei der Lebensmittelportion um eine Portion Geflügel oder Fisch und wahlweise um eine tiefgefrorene Portion Geflügel oder Fisch handelt.

15. Das Tiefkühlprodukt nach einem der voranstehenden Ansprüche 12 bis 14, wobei die Zutatenportion eine auf Stärke basierte Zubereitung enthält und/oder wobei die Zutatenportion wahlweise eine auf Fett basierte Zubereitung enthält und/oder wobei die auf Fett basierte Zutatenportion wahlweise eine auf Butter basierte Zubereitung enthält.

## Revendications

1. Procédé de préparation d'un produit alimentaire congelé, comprenant les étapes consistant à :
a) obtenir une portion alimentaire ;
b) placer une portion d'une préparation d'ingrédient uniquement au-dessus de la portion alimentaire ;
c) appliquer un givrage sur la portion alimentaire et la portion de la préparation d'ingrédient pour améliorer l'adhésion de la portion de la préparation d'ingrédient à la portion alimentaire.

2. Procédé selon la revendication 1, dans lequel la portion alimentaire de l'étape a) est une portion alimentaire au moins partiellement congelée.

3. Procédé selon la revendication 1 ou la revendication 2 comprenant l'étape supplémentaire consistant à :
d) congeler la portion alimentaire, la portion de la préparation d'ingrédient et le givrage.

4. Procédé selon l'une quelconque des revendications précédentes comprenant l'étape supplémentaire consistant à :
e) conditionner le produit alimentaire congelé dans un conditionnement de cuisson en sac.

5. Procédé selon l'une quelconque des revendications précédentes dans lequel la portion de la préparation d'ingrédient est placée au-dessus de la portion alimentaire en déposant à l'aide d'une poche à douille une quantité de préparation d'ingrédient sur la portion alimentaire.

6. Procédé selon la revendication 5, dans lequel la préparation d'ingrédient est déposée à l'aide d'une poche à douille sur la portion alimentaire à partir d'une douille qui est déplacée par rapport à la portion alimentaire pendant le dépôt à la poche à douille et dans lequel un écart entre la portion alimentaire et la douille est maintenue essentiellement constant pendant le dépôt à la poche à douille.

7. Procédé selon la revendication 2, dans lequel la portion de la préparation d'ingrédient visqueuse ou semi-solide est placée sur la surface congelée de la portion alimentaire au moins partiellement congelée de sorte qu'elle se solidifie au contact de la surface congelée.

8. Procédé selon l'une quelconque des revendications précédentes, dans lequel la préparation d'ingrédient comprend une préparation à base d'amidon.

9. Procédé selon l'une quelconque des revendications 1 à 7, dans lequel la préparation d'ingrédient comprend une préparation d'ingrédient à base de matière grasse et/ou facultativement
dans lequel la préparation d'ingrédient à basse de matière grasse comprend une préparation à base de beurre ; et/ou facultativement
dans lequel la préparation d'ingrédient à base de matière grasse comprend un mélange de beurre ou de graisse végétale, d'huile, d'amidon, d'émulsifiants et facultativement des herbes et/ou un assaisonnement.

10. Procédé selon l'une quelconque des revendications précédentes, dans lequel la congélation de la portion alimentaire et de la portion de la préparation d'ingrédient est une congélation de surface uniquement.

11. Procédé selon l'une quelconque des revendications précédentes, dans lequel la portion alimentaire est une portion de volaille ou de poisson et facultativement une portion de volaille ou de poisson congelée.

12. Produit alimentaire congelé, comprenant :
une portion alimentaire ;
une portion d'une préparation d'ingrédient uniquement au-dessus de la portion alimentaire ; et
un givrage ;
dans lequel la portion de la préparation d'ingrédient est maintenue en position sur la portion alimentaire au moins en partie par le givrage recouvrant la portion alimentaire et la portion de la préparation d'ingrédient.

13. Produit alimentaire congelé selon la revendication 12 comprenant en outre un conditionnement de cuisson en sac qui encapsule la portion alimentaire, la portion de la préparation d'ingrédient et le givrage ; et/ou facultativement dans lequel le conditionnement de cuisson en sac comprend une pluralité de perforations pour permettre à la vapeur de s'échapper du conditionnement pendant la cuisson.

14. Produit alimentaire congelé selon l'une quelconque des revendications 12 ou 13, dans lequel la portion alimentaire est une portion de volaille ou de poisson et facultativement une portion de volaille ou de poisson congelée.

15. Produit alimentaire congelé de l'une quelconque des revendications 12 à 14, dans lequel la préparation d'ingrédient comprend une préparation à base d'amidon ; et/ou facultativement
dans lequel la préparation d'ingrédient comprend une préparation d'ingrédient à base de matière grasse ; et/ou facultativement
dans lequel la préparation d'ingrédient à base de matière grasse comprend une préparation à base de beurre.
